# EUROPEAN PATENT APPLICATION

(11) **EP 2 538 079 A2**
(43) Date of publication of application: **26.12.2012**
(21) Application number: 12172626.9
(22) Date of filing: 19.06.2012
(51) Int. Cl.: F03D 11/00, B22C 9/22, B22C 9/02, B22C 7/00

(54) **Unitary support frame for use in wind turbines**

(30) Priority: 20.06.2011 US 201113164482
(71) Applicant: General Electric Company, Schenectady, NY 12345 (US)
(72) Inventor: Luneau, Michael James, Greenville, SC South Carolina 29615-4614 (US); Davis, John Paul, Schenectady, NY New York 12345 (US); Blackwell, Scott William, Greenville, SC South Carolina 29615-4614 (US); Rao, Raja Narasinga, 560066 Bangalore (IN)
(74) Representative: Bedford, Grant Richard

(57) **Abstract**

A support frame (16) for use in a wind turbine (10) including a tower (12) and a rotor (24) that is rotatably coupled to a rotor shaft (26). The support frame includes an upper portion (78) including an inner surface (82), an outer surface (84), and at least one bearing housing (86) that is sized to receive the rotor shaft therethrough. A lower portion (80) is integrally formed with the upper portion and extends from the upper portion. The lower portion includes a support flange (118) that is configured to be coupled to the tower to support the rotor shaft and the rotor from the tower.

## Description

The subject matter described herein relates generally to wind turbines and, more particularly, to a support frame for use in wind turbines and methods for fabricating a support frame.

At least some known wind turbine towers include a nacelle fixed atop a tower. The nacelle includes a rotor assembly coupled to a gearbox and to a generator through a rotor shaft. In known rotor assemblies, a plurality of blades extend from a rotor. The blades are oriented such that wind passing over the blades turns the rotor and rotates the shaft, thereby driving the generator to generate electricity.

Because many known wind turbines provide electrical power to utility grids, at least some wind turbines have larger components (e.g., rotors in excess of thirty-meters in diameter) that facilitate supplying greater quantities of electrical power. However, the larger components are often subjected to increased loads (e.g., asymmetric loads) that result from wind shears, yaw misalignment, and/or turbulence, and the increased loads have been known to contribute to significant fatigue cycles on the gearbox assembly and/or other components of the wind turbine.

At least some known wind turbines include a support frame assembly for supporting the rotor assembly, gearbox and/or generator from the tower. Known support frame assemblies include a bedplate frame and at least one bearing support assembly that are coupled together to form the support frame assembly. In addition, at least some known wind turbines include generator support frame or a "rear frame" that is cantilevered from the bedplate frame. At least some known support frame assemblies include a plurality of sections that are coupled together to form the bedplate frame. Known support frame assemblies may be subjected to stresses that cause fatigue cracking and/or failure, particularly at the joints between the bedplate sections. Over time, the joints and fasteners between the bedplate sections may become worn, which may cause damage to the rotor assembly, gearbox, and/or generator. In at least some known wind turbines, the repair of the rotor assembly, gearbox, and/or generator requires the rotor assembly, gearbox, and generator to be removed from the wind turbine prior to repairing and/or replacing the damaged rotor assembly, gearbox, and generator. In some wind turbines, the rotor blades are between 37 and 50 meters in length, and as such, repairing worn or damaged rotor assemblies, gearboxes, and generators can be costly and time-consuming.

In one aspect according to the present invention, a support frame for use in a wind turbine is provided. The wind turbine includes a tower and a rotor that is rotatably coupled to a rotor shaft. The support frame includes an upper portion including an inner surface, an outer surface, and at least one bearing housing that is sized to receive the rotor shaft therethrough. A lower portion is integrally formed with the upper portion and extends from the upper portion. The lower portion includes a support flange that is configured to be coupled to the tower to support the rotor shaft and the rotor from the tower.

In another aspect, a wind turbine is provided. The wind turbine includes a tower and a rotor that is rotatably coupled to a rotor shaft. The rotor shaft defines a centerline axis. A support frame is coupled to the rotor shaft for supporting the rotor from the tower. The support frame includes an upper portion including an inner surface, an outer surface, and at least one bearing housing that is sized to receive the rotor shaft therethrough. A lower portion is integrally formed with the upper portion and extends from the upper portion. The lower portion includes a support flange that is configured to be coupled to the tower to support the support frame from the tower.

In yet another aspect, a method of fabricating a support frame for use in a wind turbine is provided. The method includes forming a molding assembly that includes a cavity having a shape substantially similar to the support frame. The support frame includes an upper portion and a lower portion that extends from the upper portion. The upper portion includes at least one bearing housing sized to receive a wind turbine rotor shaft therethrough. The lower portion includes a support flange configured to be coupled to a wind turbine tower to support the support frame from the tower. A metal alloy is deposited within the cavity to integrally form the support frame including the upper portion and the lower portion.

Various aspects and embodiments of the present invention will now be described in connection with the accompanying drawings, in which:
FIG. 1 is a perspective view of an exemplary wind turbine.
FIG. 2 is a schematic view of a portion of the wind turbine shown in FIG. 1 including an exemplary support frame.
FIG. 3 is a perspective view of the support frame shown in FIG. 2.
FIG. 4 is another perspective view of the support frame shown in FIG. 2.
FIG. 5 is a flow chart illustrating an exemplary method that may be used for fabricating a support frame for use in a wind turbine shown in FIG. 1.

Various of the embodiments described herein may address at least some disadvantages of known wind turbines by providing a support frame that is formed as a unitary component. More specifically, the support frame described herein includes an upper portion having a bearing housing configured to support a rotor shaft, and a lower portion formed integrally with the upper portion and having a support flange configured to support the support frame from a wind turbine tower. The unitary support frame provides an increased structural integrity over known bedplate frames by eliminating the need for bolted and/or welded sections that increase the overall weight of known bedplate frames and increase areas that are subject to stress and fatigue. In addition, by providing a support frame that is a unitary component, the cost of manufacturing and assembling the support frame is reduced.

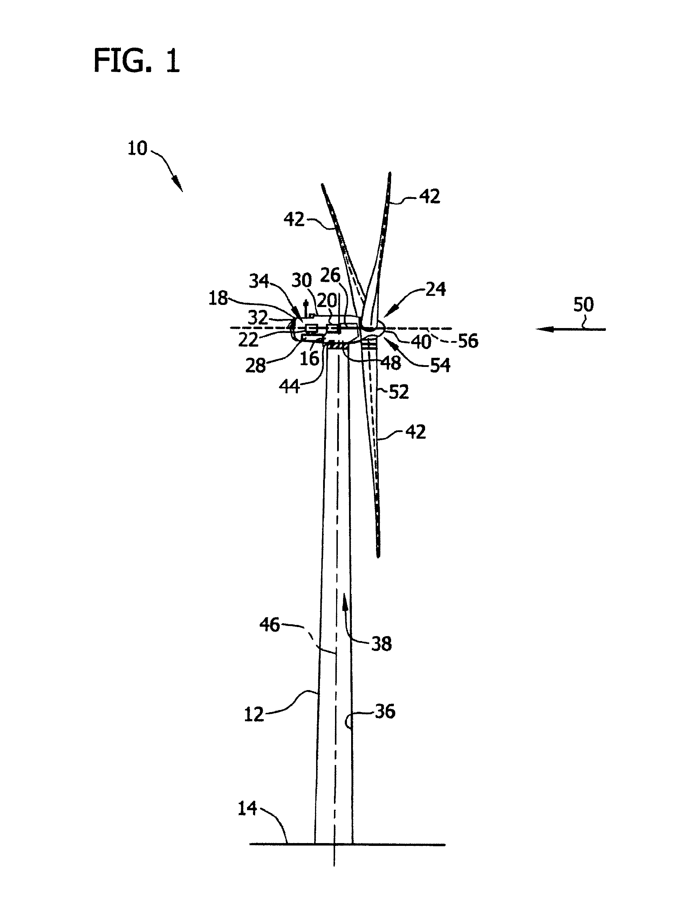

FIG. 1 is a perspective view of an exemplary wind turbine 10. In the exemplary embodiment, wind turbine 10 is a horizontal-axis wind turbine. Alternatively, wind turbine 10 may be a vertical-axis wind turbine. In the exemplary embodiment, wind turbine 10 includes a tower 12 that extends from a supporting surface 14, a support frame 16 mounted on tower 12, and a nacelle 18 coupled to support frame 16. Wind turbine 10 also includes a gearbox 20 coupled to support frame 16 and positioned within nacelle 18, a generator 22 coupled to gearbox 20, and a rotor 24 rotatably coupled to gearbox 20 with a rotor shaft 26. A generator frame 28 is coupled to support frame 16 such that generator frame 28 is cantilevered from support frame 16. Generator 22 is coupled to generator frame 28 such that generator 22 is supported from support frame 16 with generator frame 28. In an alternative embodiment, wind turbine 10 does not include gearbox 20, and rotor 24 is rotatably coupled to generator 22. In such an embodiment, wind turbine 10 does not include generator frame 28, and generator 22 is coupled to support frame 16.

In the exemplary embodiment, nacelle 18 includes a housing 30 coupled to support frame 16 and including an inner surface 32 that defines a nacelle cavity 34. Tower 12 includes an inner surface 36 that defines a tower cavity 38 extending between supporting surface 14 and nacelle 18. Support frame 16 is coupled to tower 12 such that tower cavity 38 is in flow communication with nacelle cavity 34. Rotor 24 includes a rotatable hub 40 coupled to rotor shaft 26, and at least one rotor blade 42 coupled to and extending outwardly from hub 40. Wind turbine 10 also includes a yaw drive assembly 44 for rotating rotor 24 about a yaw axis 46. A yaw bearing 48 is coupled between tower 12 and support frame 16 and is configured to rotate support frame 16 with respect to tower 12 about yaw axis 46. Yaw drive assembly 44 is coupled to support frame 16 and to yaw bearing 48 to facilitate rotating nacelle 18 and rotor 24 about yaw axis 46 to control the perspective of rotor blades 42 with respect to direction 50 of the wind. Nacelle 18, generator 22, gearbox 20, rotor shaft 26, and yaw drive assembly 44 are each mounted to support frame 16 for supporting nacelle 18, generator 22, gearbox 20, rotor shaft 26, and yaw drive assembly 44 from tower 12.

In the exemplary embodiment, rotor 24 includes three rotor blades 42. In an alternative embodiment, rotor 24 includes more or less than three rotor blades 42. Rotor blades 42 are spaced about hub 40 to facilitate rotating rotor 24 to enable kinetic energy to be transferred from the wind into usable mechanical energy, and subsequently, electrical energy. Rotor blades 42 are mated to hub 40 by coupling a blade root portion 52 to hub 40 at a plurality of load transfer regions 54. In the exemplary embodiment, rotor blades 42 have a length ranging from about 10 meters (m) (99 feet (ft)) to about 120 m (394 ft). Alternatively, rotor blades 42 may have any suitable length that enables wind turbine 10 to function as described herein. For example, other non-limiting examples of rotor blade lengths include 20 m, 37 m, a length that is greater than 120 m, or a length that is less than 10 m.

During operation of wind turbine 10, as wind strikes rotor blades 42 from wind direction 50, rotor 24 is rotated about an axis of rotation 56 causing a rotation of rotor shaft 26 about axis 56. A rotation of rotor shaft 26 rotatably drives gearbox 20 that subsequently drives generator 22 to facilitate production of electrical power by generator 22. A pitch adjustment system (not shown) adjusts a pitch angle or blade pitch of rotor blades 42 to adjust a perspective of rotor blades 42 with respect to wind direction 50 to control the load imparted to rotor blades 42 from the wind, a rotational speed of rotor 24, and/or a power generated by wind turbine 10. Yaw drive assembly 44 adjusts an orientation of rotor 24 with respect to wind direction 50 to control the perspective of rotor blades 42 with respect to wind direction 50.

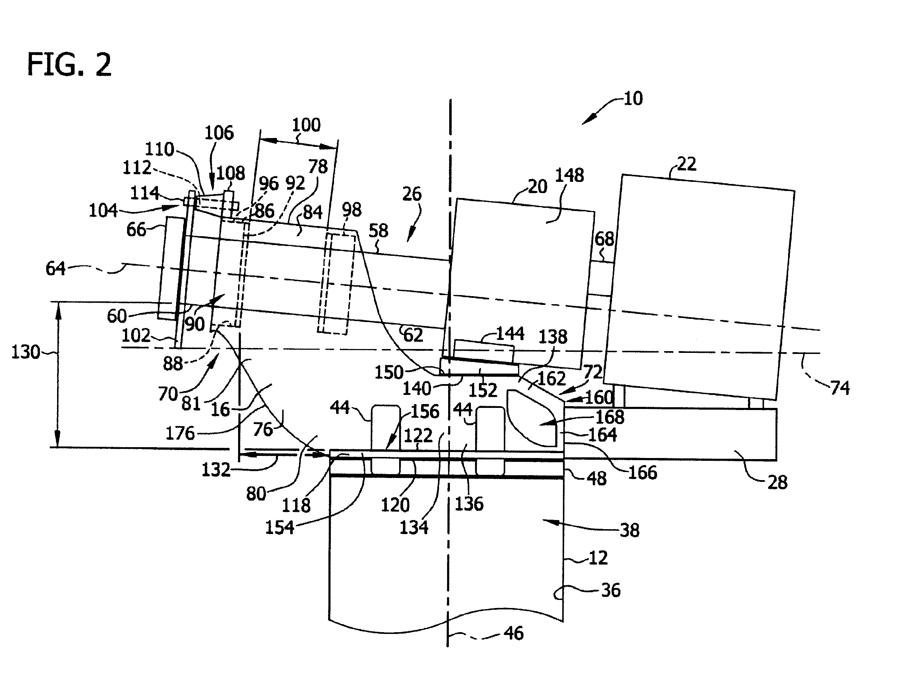

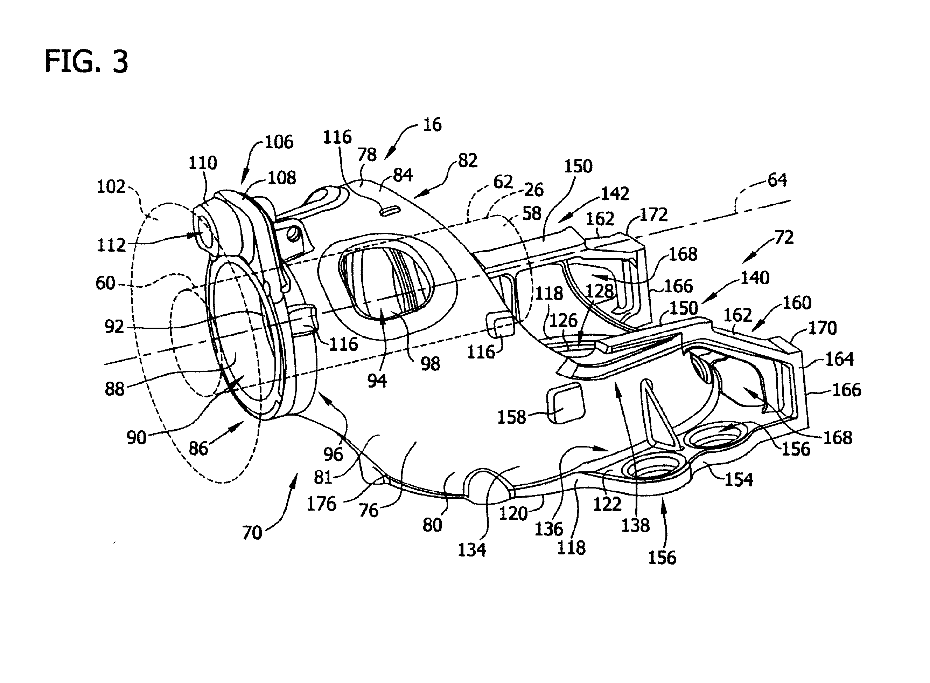

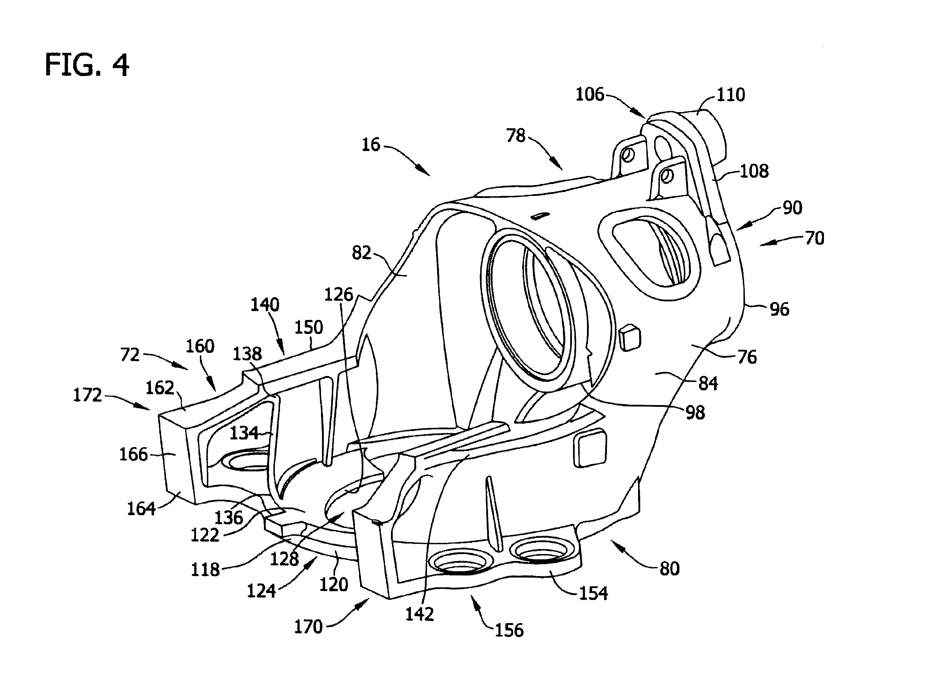

FIG. 2 is a schematic view of a portion of wind turbine 10 including support frame 16. FIG. 3 is a perspective view of support frame 16. FIG. 4 is another perspective view of support frame 16. Identical components shown in FIG. 3 and FIG. 4 are labeled with the same reference numbers used in FIG. 2. In the exemplary embodiment, rotor shaft 26 includes a substantially cylindrical body 58 that extends between a first end 60 and an opposite second end 62 along a centerline axis 64. First end 60 is positioned adjacent hub 40 (shown in FIG. 1) and includes a rotor flange 66 coupled to hub 40 such that a rotation of hub 40 facilitates rotating rotor shaft 26 about axis 64. Second end 62 is rotatably coupled to gearbox 20 such that a rotation of rotor shaft 26 rotatably drives gearbox 20. A high speed shaft 68 is rotatably coupled between gearbox 20 and generator 22 to enable gearbox 20 to rotatably drive generator 22. During operation of wind turbine 10, a rotation of rotor shaft 26 rotatably drives gearbox 20 that subsequently drives high speed shaft 68. High speed shaft 68 rotatably drives generator 22 to facilitate production of electrical power by generator 22.

In the exemplary embodiment, support frame 16 extends between a forward section 70 and an aft section 72 along a longitudinal axis 74 defined between forward section 70 and aft section 72. Support frame 16 includes a sidewall 76 that includes an upper portion 78, a lower portion 80, and a transition portion 81 that extends between upper portion 78 and lower portion 80. Lower portion 80 extends from upper portion 78 and is integrally formed with upper portion 78 and transition portion 81 such that support frame 16 is formed as a single, or unitary, component. In the exemplary embodiment, upper portion 78 includes an inner surface 82 and an outer surface 84. Inner surface 82 includes at least one bearing housing 86 sized and shaped to receive rotor shaft 26 therethrough. Bearing housing 86 includes an inner surface 88 that defines an opening 90 having a substantially cylindrical shape. Opening 90 is configured to receive a support bearing (not shown) therein such that the support bearing is positioned between bearing housing 86 and rotor shaft 26. The support bearing is configured to enable rotor shaft 26 to rotate with respect to support frame 16. Bearing housing 86 includes a positioning shoulder 92 that extends radially inwardly from bearing inner surface 88 to facilitate orienting the support bearing with respect to rotor shaft 26. Bearing housing 86 facilitates radial support and alignment of rotor shaft 26. Upper portion 78 also includes one or more openings 94 extending through sidewall 76 to provide access to bearing housing 86.

In the exemplary embodiment, upper portion 78 includes a first bearing housing, i.e. a forward bearing housing 96, and a second bearing housing, i.e. an aft bearing housing 98. Forward bearing housing 96 is positioned adjacent forward section 70. Aft bearing housing 98 is oriented substantially coaxially with forward bearing housing 96 along centerline axis 64 and is positioned an axial distance 100 from forward bearing housing 96. Aft bearing housing 98 has a similar size and shape to forward bearing housing 96 such that forward bearing housing 96 and aft bearing housing 98 are each configured to receive rotor shaft 26 therethrough. Rotor shaft 26 extends through forward bearing housing 96 and aft bearing housing 98 such that first end 60 is adjacent forward bearing housing 96 and second end 62 is adjacent aft bearing housing 98.

Rotor shaft 26 includes a rotor locking disk 102 coupled to first end 60. Rotor locking disk 102 defines a plurality of openings 104 each extending through rotor locking disk 102 and positioned circumferentially about rotor locking disk 102. Support frame 16 includes a rotor lock assembly 106 that extends outwardly from upper portion 78 and is positioned adjacent forward section 70. Rotor lock assembly 106 includes a support plate 108 that extends radially outwardly from upper portion outer surface 84 and a locking pin housing 110 that extends axially from support plate 108 towards rotor locking disk 102. Locking pin housing 110 defines an opening 112 sized and shaped to receive a locking pin 114 therethrough. Locking pin housing 110 is positioned adjacent rotor locking disk 102 such that locking pin 114 is inserted through opening 112 and extends into a corresponding opening 104 of rotor locking disk 102 to facilitate locking rotor shaft 26 by limiting a rotation of rotor shaft 26 about axis 64. Upper portion 78 also includes a plurality of mounting flanges 116 extending outwardly from outer surface 84. Each mounting flange 116 is configured to support various components of wind turbine 10 including, but not limited to, access ladders, electrical and communication cable supports, electrical and control panels, and/or HVAC equipment.

In the exemplary embodiment, lower portion 80 includes a support flange 118 that extends outwardly from sidewall 76 and is configured to be coupled to tower 12 to enable support frame 16 to be supported from tower 12. Support flange 118 includes an inner surface 120 and an outer surface 122. Inner surface 120 is positioned adjacent tower 12. Support flange 118 is oriented substantially parallel with yaw bearing 48 and includes a plurality of openings 124 that extend through support flange 118 from inner surface 120 to outer surface 122. Each opening 124 is sized to receive a fastener therethrough to enable support flange 118 to be coupled to yaw bearing 48. Support flange 118 includes a radially inner surface 126 that includes a substantially cylindrical shape and defines an opening 128 that extends through support flange 118 to provide access between nacelle cavity 34 and tower cavity 38.

Forward and aft bearing housings 96 and 98 are positioned above support flange 118 such that rotor shaft first end 60 is supported a radial distance 130 from support flange 118. In one embodiment, forward bearing housing 96 extends a distance 132 from support flange 118 along longitudinal axis 74. In the exemplary embodiment, forward and aft bearing housings 96 and 98 are oriented such that rotor shaft 26 extends along centerline axis 64 at an oblique angle with respect to support flange outer surface 122. Alternatively, forward and aft bearing housings 96 and 98 are oriented such that rotor shaft 26 is oriented substantially parallel with respect to support flange outer surface 122.

In the exemplary embodiment, lower portion 80 includes a sidewall 134 that extends outwardly from support flange 118 between a lower section 136 and an upper section 138. Lower section 136 is positioned adjacent support flange 118. Upper section 138 extends from lower section 136 and includes a first support member 140 and an opposite second support member 142. First and second support members 140 and 142 each extend along longitudinal axis 74 from forward section 70 to aft section 72. First and second support members 140 and 142 are each configured to support gearbox 20 from sidewall 134. More specifically, gearbox 20 includes a first torque arm 144 and a second torque arm (not shown) that is opposite first torque arm 144. First torque arm 144 and the second torque arm each extend radially outwardly from an outer surface 148 of gearbox 20. First torque arm 144 is coupled to first support member 140 and the second torque arm is coupled to second support member 142 to facilitate supporting gearbox 20 from support frame 16.

First and second support members 140 and 142 each include a planar outer surface 150 configured to support a plurality of mounting pads 152 thereupon such that each mounting pad 152 is positioned between gearbox 20 and support frame 16. Each mounting pad 152 is configured to selectively adjust a position and orientation of gearbox 20 with respect to support frame 16 and rotor shaft 26. Planar outer surfaces 150 of first and second support members 140 and 142 are each oriented substantially parallel to support flange outer surface 122. In the exemplary embodiment, first and second support members 140 and 142 are oriented at an oblique angle with respect to rotor shaft 26 and centerline axis 64. Alternatively, first and second support members 140 and 142 may be oriented substantially parallel to centerline axis 64. In an alternative embodiment, wind turbine 10 does not include gearbox 20 and first and second support members 140 and 142 are each configured to support generator 20 from sidewall 134.

In the exemplary embodiment, support flange 118 includes a yaw support 154 that extends outwardly from sidewall outer surface 84. Yaw support 154 defines one or more openings 156 that extend between inner and outer surfaces 120 and 122, and are each sized to receive yaw drive assembly 44 therethrough. Yaw support 154 is configured to at least partially support yaw drive assembly 44 from support flange 118. Yaw drive assembly 44 is positioned within opening 156 and is coupled to yaw support 154 to at least partially support yaw drive assembly 44 from support flange 118. In the exemplary embodiment, sidewall 76 includes one or more nacelle mounting flanges 158 that extend outwardly from sidewall outer surface 84. Nacelle 18 is coupled to nacelle mounting flange 158 such that nacelle 18 is supported from support frame 16 with nacelle mounting flange 158. In one embodiment, lower portion 80 includes one or more mounting flanges 158. Alternatively, upper portion 78 includes mounting flanges 158.

Lower portion 80 also includes at least one generator support assembly 160 that extends outwardly from sidewall 134 towards generator 22 along longitudinal axis 74. Generator support assembly 160 includes an upper flange 162 that extends outwardly from support members 140 and 142, and a lower flange 164 that extends between upper flange 162 and support flange 118. Upper flange 162 is oriented at an oblique angle with respect to support members 140 and 142. In the exemplary embodiment, lower flange 164 includes a planar outer surface 166 that extends between support flange 118 and upper flange 162, and is oriented substantially perpendicularly with respect to support flange outer surface 122. Upper and lower flanges 162 and 164 are oriented such that an opening 168 is defined between generator support assembly 160 and sidewall 134 to facilitate reducing a weight of support frame 16.

In the exemplary embodiment, lower portion 80 includes a first generator support assembly 170 and an opposite second generator support assembly 172 each extending outwardly from aft section 72 along longitudinal axis 74. Each first and second generator support assemblies 170 and 172 is configured to be coupled to generator frame 28 such that generator frame 28 is cantilevered from first and second generator support assemblies 170 and 172.

In the exemplary embodiment, transition portion 81 includes an arcuate outer surface 176 that transitions from upper portion 78 to lower portion 80. Transition portion outer surface 176 is substantially smooth and does not include connection joints, such as for example, a bolted connection and/or a welded connection, such that such that support frame 16 is formed as a single, or unitary, component.

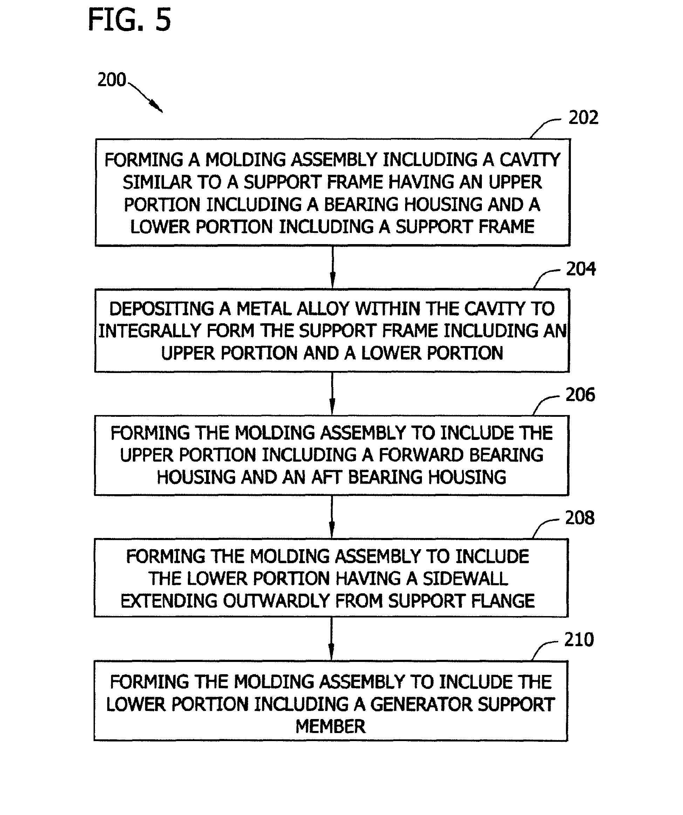

FIG. 5 is a flow chart illustrating an exemplary method 200 for fabricating support frame 16. In the exemplary embodiment, method 200 includes forming 202 a molding assembly including a cavity having a shape substantially similar to support frame 16 such that support frame 16 includes upper portion 78 and lower portion 80 extending from upper portion 78. Upper portion is formed to include at least one bearing housing 86 sized to receive rotor shaft 26 therethrough. Lower portion is formed to include support flange 118 configured to be coupled to tower 12 such that support frame 16 is supported from tower 12. A metal alloy is deposited 204 within the cavity to integrally form support frame 16 including upper portion 78 and lower portion 80. In the exemplary embodiment, the molding assembly is formed 206 to include upper portion 78 including forward bearing housing 96 and aft bearing housing 98 such that aft bearing housing 98 is positioned distance 100 from forward bearing housing 96. The molding assembly is further formed 208 to include lower portion 80 including sidewall 76 extending outwardly from support flange 118 such that sidewall 76 includes first support member 140 and second support member 142 that is opposite first support member 140. Each first and second support members 140 and 142 are configured to support gearbox 20. The molding assembly is further formed 210 to include lower portion 80 including generator support assembly 160 such that generator support assembly 160 extends outwardly from support flange 118 and is configured to support generator 22 from support frame 16.

In one embodiment, support frame 16 is formed using sand casting. In such an embodiment, during fabrication of support frame 16, the molding assembly includes a plurality of mold sections. A first pattern assembly is formed having a shape substantially similar to upper portion 78. The first pattern assembly is formed including wood, plastic, ceramic, and/or any suitable material to enable the first pattern assembly to function as described herein. A flask is coupled to the first pattern assembly such that a cavity is defined therebetween. A mixture of sand and resin is injected into the cavity and compressed to form an upper portion mold having a shape substantially similar to upper portion 78. After the mold has been set, the upper portion mold is coupled to a gating system and the first pattern assembly is removed. A second pattern assembly is formed having a shape substantially similar to lower portion 80. A flask is coupled to the second pattern assembly such that a cavity is defined therebetween. The sand/resin mixture is deposited within the cavity and compressed to form a lower portion mold having a shape substantially similar to lower portion 80. After the mold has been set, a gating system is coupled to the lower portion mold and the second pattern assembly is removed. Upper portion mold and lower portion mold are coupled together to form the molding assembly that defines a cavity including a shape that is substantially similar to support frame 16 including upper and lower portions 78 and 80. The gating system is configured to inject a metal alloy into the cavity. The metal alloy is deposited into the cavity through the gating system and is cooled to form a unitary support frame casting. After the metal alloy has been cooled, the upper and lower molds are removed and the casting is machined to form a unitary support frame 16.

The orientation and position of upper and lower portions 78 and 80 of support frame 16 is selected to facilitate supporting rotor 24, gearbox 20, generator 22, and nacelle 18 from a unitary component. By fabricating support frame 16 as a unitary component, support frame 16 provides an increased stiffness and structural integrity over known bedplate frames by eliminating bolted and/or welded connections between bedplate sections. In addition, by providing a unitary support frame 16 to support the components of wind turbine 10, the cost of repairing damaged wind turbine components is significantly reduced as compared to known wind turbines because failures caused by structural fatigue of the bolted and/or welded connections is reduced.

The embodiments described herein overcome at least some disadvantages of known wind turbines by providing a support frame formed as a unitary component. More specifically, the support frame described herein includes a upper portion that includes a bearing housing configured to support a rotor shaft, and a lower portion formed integrally with the upper portion and including a support flange configured to support the support frame from a wind turbine tower. The unitary support frame provides an increased stiffness and structural integrity over known bedplate frames by eliminating the need for bolted and/or welded sections that increase the overall weight of known bedplate frames and increase areas that are subject to stress and fatigue. In addition, by providing a support frame that is a unitary component, the cost of manufacturing and assembling the support frame is facilitated to be reduced.

The above-described systems and methods overcome at least some disadvantages of known wind turbines by providing a support frame formed as a unitary component. More specifically, the support frame described herein includes a upper portion that includes a bearing housing to support a rotor shaft, and a lower portion that includes a support flange to support the support frame from a wind turbine tower. By providing a support frame including a unitary component, the rotor, gearbox, generator, and nacelle are supported from a support frame that does not include a plurality of jointed sections that are subject to fatigue during operation of the wind turbine that may cause damage to the rotor, gearbox, generator, and/or nacelle. In addition, by providing a support frame that is a unitary component, the cost and manpower required to manufacture and assemble the support frame is significantly reduced. Reducing such costs extends the operational life expectancies of wind turbine systems.

Exemplary embodiments of systems and methods for fabricating a support frame for use in a wind turbine are described above in detail. The systems and methods are not limited to the specific embodiments described herein, but rather, components of the assemblies and/or steps of the methods may be utilized independently and separately from other components and/or steps described herein. For example, the methods may also be used in combination with other wind turbine components, and are not limited to practice with only the wind turbine components as described herein. Rather, the exemplary embodiment can be implemented and utilized in connection with many other wind turbine applications.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined in the following numbered clauses:
1. A support frame for use in a wind turbine, the wind turbine including a tower and a rotor rotatably coupled to a rotor shaft, said support frame comprising:
   an upper portion comprising an inner surface, an outer surface, and at least one bearing housing sized to receive the rotor shaft therethrough; and,
   a lower portion integrally formed with said upper portion and extending from said upper portion, said lower portion comprising a support flange configured to be coupled to the tower to support the rotor shaft and the rotor from the tower.
2. A support frame in accordance with clause 1, wherein said upper portion further comprises:
   a forward bearing housing; and,
   an aft bearing housing positioned an axial distance from said forward bearing housing and oriented substantially coaxially with respect to said forward bearing, each said forward bearing housing and said aft bearing housing configured to receive the rotor shaft therethrough.
3. A support frame in accordance with any preceding clause, wherein said upper portion comprises a rotor lock assembly extending outwardly from said outer surface.
4. A support frame in accordance with any preceding clause, wherein the wind turbine includes a gearbox coupled to the rotor shaft, said lower portion comprising a sidewall extending outwardly from said support flange, said sidewall comprising a first gearbox support member and a second gearbox support member that is opposite said first gearbox support member, each said first and second gearbox support members configured to support the gearbox from said sidewall.
5. A support frame in accordance with any preceding clause, wherein each said first and second gearbox support members comprises a planar outer surface oriented obliquely with respect to the centerline axis.
6. A support frame in accordance with any preceding clause, wherein the wind turbine includes a generator coupled to the gearbox, said lower portion comprising at least one generator support assembly extending outwardly from said support flange, said generator support assembly configured to support the generator from said support frame.
7. A support frame in accordance with any preceding clause, wherein said at least one generator support assembly comprises a planar surface oriented substantially perpendicular to an outer surface of said support flange.
8. A support frame in accordance with any preceding clause, wherein the wind turbine includes a yaw drive assembly coupled to the tower, said support flange comprises at least one opening extending through said support flange and configured to receive the yaw drive assembly therethrough.
9. A support frame in accordance with any preceding clause, wherein the wind turbine comprises a nacelle, said support frame comprising an outer surface and at least one nacelle mounting flange extending outwardly from said outer surface, said nacelle mounting flange configured to support the nacelle from said support frame.
10. A wind turbine, comprising:
   a tower;
   a rotor rotatably coupled to a rotor shaft, said rotor shaft defining a centerline axis; and,
   a support frame coupled to said rotor shaft for supporting said rotor from said tower, said support frame comprising:
      an upper portion comprising an inner surface, an outer surface, and at least one bearing housing sized to receive said rotor shaft therethrough; and,
      a lower portion integrally formed with said upper portion and extending from said upper portion, said lower portion comprising a support flange configured to be coupled to said tower to support said support frame from said tower.
11. A wind turbine in accordance with any preceding clause, wherein said upper portion comprises:
   a forward bearing housing; and,
   an aft bearing housing positioned an axial distance from said forward bearing housing and oriented substantially coaxially with respect to said forward bearing, each said forward bearing housing and said aft bearing housing configured to receive said rotor shaft therethrough.
12. A wind turbine in accordance with any preceding clause, wherein said upper portion comprises a rotor lock assembly extending outwardly from said outer surface.
13. A wind turbine in accordance with any preceding clause, further comprising a gearbox coupled to said rotor shaft, said support frame lower portion comprising a sidewall extending outwardly from said support flange, said sidewall comprising a first gearbox support member and a second gearbox support member that is opposite said first gearbox support member, each said first and second gearbox support members configured to support said gearbox from said sidewall.
14. A wind turbine in accordance with any preceding clause, further comprising a generator coupled to said gearbox, said support frame lower portion comprising at least one generator support assembly extending outwardly from said support flange, said generator support assembly configured to support said generator from said support frame.
15. A wind turbine in accordance with any preceding clause, further comprising at least one yaw drive assembly coupled to said tower, said support flange comprising at least one opening extending through said support flange and configured to receive said yaw drive assembly therethrough.
16. A method of fabricating a support frame for use in a wind turbine, said method comprises:
   forming a molding assembly including a cavity having a shape substantially similar to the support frame, the support frame including an upper portion and a lower portion that extends from the upper portion, wherein the upper portion includes at least one bearing housing sized to receive a wind turbine rotor shaft therethrough, the lower portion includes a support flange configured to be coupled to a wind turbine tower to support the support frame from the tower; and,
   depositing a metal alloy within the cavity to integrally form the support frame including the upper portion and the lower portion.
17. A method in accordance with any preceding clause, further comprising forming a molding assembly using sand casting.
18. A method in accordance with any preceding clause, wherein said forming a molding assembly comprises forming the upper portion of the support frame including a forward bearing housing and an aft bearing housing positioned an axial distance from the forward bearing housing, each of the forward bearing housing and the aft bearing housing configured to receive the rotor shaft therethrough.
19. A method in accordance with any preceding clause, wherein said forming a molding assembly comprises forming the lower portion including a sidewall extending outwardly from the support flange, wherein the sidewall includes a first gearbox support member and a second gearbox support member that is opposite the first gearbox support member, each of the first and second gearbox support members configured to support a wind turbine gearbox.
20. A method in accordance with any preceding clause, wherein said forming a molding assembly further comprises forming the lower portion including at least one generator support assembly extending outwardly from the support flange, the generator support assembly configured to support a generator from the support frame.

## Claims

1. A support frame (16) for use in a wind turbine (10), the wind turbine including a tower (12) and a rotor (24) rotatably coupled to a rotor shaft (26), said support frame comprising:
an upper portion (78) comprising an inner surface (82), an outer surface (84), and at least one bearing housing (86) sized to receive the rotor shaft therethrough; and
a lower portion (80) integrally formed with said upper portion and extending from said upper portion, said lower portion comprising a support flange (118) configured to be coupled to the tower to support the rotor shaft and the rotor from the tower.

2. A support frame (16) in accordance with claim 1, wherein said upper portion (78) further comprises:
a forward bearing housing (96); and
an aft bearing housing (98) positioned an axial distance from said forward bearing housing and oriented substantially coaxially with respect to said forward bearing, each said forward bearing housing and said aft bearing housing configured to receive the rotor shaft (26) therethrough.

3. A support frame (16) in accordance with any preceding claim, wherein said upper portion (78) comprises a rotor lock assembly (106) extending outwardly from said outer surface (84).

4. A support frame (16) in accordance with any preceding claim, wherein the wind turbine (10) includes a gearbox (20) coupled to the rotor shaft (26), said lower portion (80) comprising a sidewall (134) extending outwardly from said support flange (118), said sidewall comprising a first gearbox support member (140) and a second gearbox support member (142) that is opposite said first gearbox support member, each said first and second gearbox support members configured to support the gearbox from said sidewall.

5. A support frame (16) in accordance with claim 4, wherein each said first and second gearbox support members (140, 142) comprises a planar outer surface (150) oriented obliquely with respect to the centerline axis (64).

6. A support frame (16) in accordance with claim 4 or claim 5, wherein the wind turbine (10) includes a generator (22) coupled to the gearbox (20), said lower portion (80) comprising at least one generator support assembly (160) extending outwardly from said support flange (118), said generator support assembly configured to support the generator from said support frame.

7. A support frame (16) in accordance with claim 6, wherein said at least one generator support assembly (160) comprises a planar surface (166) oriented substantially perpendicular to an outer surface (122) of said support flange (118).

8. A wind turbine (10), comprising:
a tower (12);
a rotor (24) rotatably coupled to a rotor shaft (26), said rotor shaft defining a centerline axis (64); and
a support frame (16) coupled to said rotor shaft for supporting said rotor from said tower, said support frame comprising:
an upper portion (78) comprising an inner surface (82), an outer surface (84), and at least one bearing housing (86) sized to receive said rotor shaft therethrough; and
a lower portion (80) integrally formed with said upper portion and extending from said upper portion, said lower portion comprising a support flange (118) configured to be coupled to said tower to support said support frame from said tower.

9. A wind turbine (10) in accordance with claim 8, wherein said upper portion (78) comprises:
a forward bearing housing (96); and
an aft bearing housing (98) positioned an axial distance from said forward bearing housing and oriented substantially coaxially with respect to said forward bearing, each said forward bearing housing and said aft bearing housing configured to receive said rotor shaft (26) therethrough.

10. A wind turbine (10) in accordance with claim 8 or claim 9, wherein said upper portion (78) comprises a rotor lock assembly (106) extending outwardly from said outer surface (84).
